# EUROPEAN PATENT SPECIFICATION

(11) **EP 3 881 919 B1**
(45) Date of publication and mention of the grant of the patent: **11.11.2026**
(21) Application number: 19883376.6
(22) Date of filing: 05.07.2019
(51) Int. Cl.: B01D 15/18

(54) **HIGH-PERFORMANCE SIMULATED MOVING BED DEVICE AND HIGH-PERFORMANCE SIMULATED MOVING BED TECHNIQUE**
HOCHLEISTUNGSFÄHIGE SIMULIERTE WANDERBETTVORRICHTUNG UND HOCHLEISTUNGSFÄHIGE SIMULIERTE WANDERBETTTECHNIK
DISPOSITIF ET TECHNIQUE À LIT MOBILE SIMULÉ À HAUT RENDEMENT

(30) Priority: 14.11.2018 CN 201811362623
(43) Date of publication of application: 22.09.2021
(73) Proprietor: INNER MONGOLIA YITAI COAL-BASED NEW MATERIALS RESEARCH INSTITUTE CO., LTD., Erdos, Inner Mongolia 010700 (CN)
(72) Inventor: QIAN, Zhen, Mongolia 010700 (CN); WU, Jingwei, Mongolia 010700 (CN); LI, Juncheng, Mongolia 010700 (CN); ZHANG, Jingquan, Mongolia 010700 (CN); JIAN, Qinge, Mongolia 010700 (CN); ZHANG, Xiaolong, Mongolia 010700 (CN); GAO, Yuan, Mongolia 010700 (CN); WU, Xueting, Mongolia 010700 (CN); CHEN, Haoting, Mongolia 010700 (CN)
(74) Representative: De Clercq & Partners
(86) International application number: PCT/CN2019/094854
(87) International publication number: WO 2020/098295

(56) References cited:
- EP-A1- 2 108 423
- WO-A1-2013/055932
- CN-A- 1 127 670
- CN-A- 105 521 622
- CN-A- 107 879 900
- CN-A- 109 432 822
- CN-U- 202 315 413
- CN-U- 203 220 780
- CN-U- 203 220 780
- FR-A1- 2 978 358
- US-A- 3 706 812
- US-A- 5 705 061
- US-A- 6 004 518
- US-B1- 6 325 940

## Description

### TECHNICAL FIELD

The present disclosure relates to a field of simulated moving bed separation technology, and in particular to an efficient simulated moving bed device and an efficient simulated moving bed process.

### BACKGROUND

Simulated moving bed is a separation device that performs separations by using an adsorption principle. As a main representative of continuous chromatography, simulated moving bed technology has high production efficiency, low consumption of organic solvents and large mass transfer driving force, and is convenient for automatic continuous production. It is widely used in petrochemical, food industry and pharmaceutical fields. The simulated moving bed technology is a complex industrial process as well as a non-linear, non-equilibrium, non-ideal, multi-degree-of-freedom periodic process with a plurality of influencing factors.

In the simulated moving bed, a fixed adsorption bed is divided into a plurality of sections filled with adsorbents, and liquid may not directly circulate between the sections. Each section is provided with inlet and outlet pipes, which are controlled by a multi-channel rotary valve. Generally, in a simulated moving bed with 8 adsorption columns, 20 of 24 inlets and outlets only serve as inter-section connections, and the other 4 inlets and outlets are used for entering or exiting of four strands of materials. Positions of the material inlets and outlets at a certain moment divide the entire adsorption bed into four zones. Each zone has a different length, and each section has a different interphase mass transfer.

By using the multi-channel rotary valve, the simulated moving bed enables the four material inlets and outlets to move upward at a speed synchronized with a change of a solid phase concentration. In this way, a closed loop is formed. An overall result of the closed loop is substantially the same as an effect produced by keeping the positions of the inlets and outlets in place while moving the solid adsorbent from top to bottom in the adsorber, so as to achieve a separation effect. A core device of this process is the multi-channel rotary valve. With a rotation of the multi-channel rotary valve, a periodic switching of the process is realized, thereby achieving a purpose of separating products.

In the related art, CN100453867C discloses a 36-way rotary valve used for a simulated moving bed of an efficient liquid chromatography. The 36-way rotary valve is connected to a stepping motor provided with a synchronous pulley through a belt. The 36-way rotary valve mainly includes a stator and a cover mounted on the stator. A transmission shaft is provided between the stator and the cover. The transmission shaft has one end inserted into a center hole of the stator and another end that passes through the cover and that is installed with a further synchronous pulley. A sealing ring is installed and fixed evenly on a periphery of the stator and the cover. A rotor, a driving disc, a disc spring, an adjusting pad and a thrust bearing are further provided in sequence from bottom to top between the stator and the cover. The 36-way rotary valve has a compact structure and a small dead volume, which greatly reduces a failure rate of the simulated moving bed device. However, the 36-way rotary valve has a high cost and is inconvenient for disassembly and maintenance. When replacing the adsorbent, the entire simulated moving bed device needs to be shut down, which reduces a long-term operation capability of the device.

The use of a program-controlled valve in the simulated moving bed is already an existing technology. The Axens Eluxyl simulated moving bed process and the Sorpx simulated moving bed process are also controlled by n*24 program-controlled valve groups. However, due to different volumes of pipelines of the program-controlled valve groups connected to the adsorption columns as well as a periodic change of a relative position of the circulating pump in an area, a flow rate of the circulating pump varies greatly with the area in which it is located, which is difficult to control and has a large pressure fluctuation.

EP2108423A1 discloses simulated moving bed (SMB) chromatography involving a series of columns serially connected in a circuit, which is performed in a modified protocol by dividing the columns into two groups isolated from flow communication with each other and using one of the two groups solely for extraction of the more strongly retained component from the solid phase while the other group is operated in the conventional SMB manner. The sites of introduction and withdrawal and the site of division between the two groups of columns are all rotated around the circuit as in conventional SMB chromatography, but the process is capable of separating component mixtures with nonlinear isotherms and of extracting solutes that are very strongly retained on the solid phase.

### SUMMARY

In view of the above-mentioned technical problems of the simulated moving bed in the related art, an objective of the present disclosure is to provide an efficient simulated moving bed device and an efficient simulated moving bed process. In the present disclosure, a program-controlled valve group instead of a conventional multi-channel rotary valve is used to control a periodic switching of the simulated moving bed, which reduces a device cost. The program-controlled valve group may be flexibly switched out according to maintenance requirements, thereby facilitating the device maintenance. Each adsorption column may be switched out for maintenance, and switched into the system after replacing the adsorbent. In this way, the long-term operation capability of the device is greatly improved. Furthermore, in the present disclosure, each pipeline connected to the adsorption column has a same volume, and the relative position of the circulating pump in an area is constant. Therefore, the flow rate of the circulating pump is unchanged, the pressure fluctuation is small, and the control is simple.

A first aspect of the present disclosure provides an efficient simulated moving bed device, including an adsorption bed, a raw material feeding system, a desorbent feeding system, a circulating system, an extract system, a raffinate system, a program-controlled valve group, and an automatic control system; wherein the adsorption bed includes a plurality of adsorption columns divided into an adsorption zone, a purification zone and a desorption zone; each adsorption column of the plurality of adsorption columns has an upper end provided with a raw material feeding valve, a desorbent feeding valve and a circulation fluid feeding valve and a lower end provided with a raffinate discharge valve and an extract discharge valve; a check valve is provided between two adjacent adsorption columns; the raw material feeding system is connected to the raw material feeding valve of the each adsorption column; the desorbent feeding system is connected to the desorbent feeding valve of the each adsorption column; the circulating system includes a circulating pump connected to the circulation liquid feeding valve of the each adsorption column; the extract system is connected to the extract discharge valve of the each adsorption column; the raffinate system is connected to the raffinate discharge valve of the each adsorption column; all the valves form the program-controlled valve group, the program-controlled valve group is connected to the automatic control system, and the automatic control system is configured to control an opening state and a closing state of each valve in the program-controlled valve group.

Preferably, the adsorption bed includes 3 to 100 adsorption columns.

Preferably, the adsorption bed includes 8*N adsorption columns, where N is an integer greater than or equal to 1.

Preferably, the raw material feeding system includes a raw material pump and a raw material heater located downstream of the raw material pump, and the raw material heater includes an outlet pipeline connected to the adsorption column.

Preferably, the desorbent feeding system includes a desorbent pump and a desorbent heater located downstream of the desorbent pump, and the desorbent heater includes an outlet pipeline connected to the adsorption column.

Preferably, the extract system includes an extract pump connected to an extract pipeline of the adsorption bed.

Preferably, a cooler is provided on the extract pipeline.

Preferably, the raffinate system includes a raffinate pump or a back pressure valve connected to a raffinate pipeline of the adsorption bed. Preferably, a cooler is provided on the raffinate pipeline.

The circulating pump of the circulating system includes a feed port connected to the extract pipeline of the adsorption bed.

A heater and a flow meter are provided downstream of the circulating pump of the circulating system.

Preferably, each of the valves in the program-controlled valve group is independently selected as one of a ball valve, a needle valve, a stop valve, and a butterfly valve.

Preferably, the valve includes a pneumatic actuator or an electric actuator.

Preferably, a relative position of the circulating pump in an area is constant.

Each connecting pipeline between the adsorption columns has a same volume.

Each pipeline of the each adsorption column connected to the circulating pump has a same volume.

Preferably, the adsorption bed further includes a buffer zone. That is, the adsorption bed is divided into the adsorption zone, the purification zone, the desorption zone, and the buffer zone.

A second aspect of the present disclosure provides an efficient simulated moving bed process implemented by the efficient simulated moving bed device described above, in which valves are controlled to switch to change each feeding position and each discharging position so as to perform a simulated movement of an adsorption zone, a purification zone and a desorption zone.

Preferably, the valves are controlled to switch to change each feeding position and each discharging position so as to perform a simulated movement of an adsorption zone, a purification zone, a desorption zone and a buffer zone.

Preferably, the adsorption bed includes 8 adsorption columns. The efficient simulated moving bed process specifically includes following steps. In 0-t stage, a check valve A1 and a desorbent feeding valve A2 of an adsorption column 1, a desorbent feeding valve B2 and an extract discharge valve B6 of an adsorption column 2, a circulation fluid feeding valve C4 of an adsorption column 3, a check valve D1 of an adsorption column 4, a check valve E1 and a raw material feeding valve E3 of an adsorption column 5, a check valve F1 and a raffinate discharge valve F5 of an adsorption column 6, a check valve G1 of an adsorption column 7, and a check valve H1 of an adsorption column 8 are opened, and other valves are closed. At this time, the adsorption zone includes the adsorption column 5 and the adsorption column 6, the raw material enters the adsorption column 5 and the adsorption column 6, a target product component is absorbed, and a non-target component flows out from the outlet. The purification zone includes the adsorption column 3 and the adsorption column 4, and the circulating pump drives the circulation liquid into the adsorption column 3 and the adsorption column 4 to purify the target product component adsorbed in a previous period. The desorption zone includes the adsorption column 1 and the adsorption column 2, the desorbent pump drives the desorbent and a part of the desorbent from the buffer zone to enter the adsorption column 1 and the adsorption column 2, and the target product component purified in a previous stage is eluted and extracted from the system, thereby achieving the adsorption and separation. The buffer zone includes the adsorption column 7 and the adsorption column 8, most of the target product component in the raw material is adsorbed in the adsorption zone, and a remaining mixture containing a large amount of non-target component and a small amount of target component enters the buffer zone and waits for a next period. The valves are controlled to switch to change positions of feeding and discharging materials in t-2t, 2t-3t and 3t-4t stages, thereby realizing the simulated movement of the adsorption zone, the purification zone, the desorption zone and the buffer zone.

Compared with the related art, the present disclosure achieves beneficial effects. In view of the technical problems that the multi-channel rotary valve in the related art has a high cost and a poor long-term operation ability and is difficult in maintenance and difficult to control, the present disclosure creatively provides an efficient simulated moving bed device, in which the program-controlled valve group instead of the conventional multi-channel rotary valve is used to control the periodic switching of the simulated moving bed, thereby reducing the device cost. The program-controlled valve group may be flexibly switched out according to maintenance requirements, thereby facilitating the device maintenance. Each adsorption column may be switched out for maintenance and switched into the system after replacing the adsorbent. In this way, the long-term operation capability of the device is greatly improved. In the present disclosure, each pipeline connected to the adsorption column has a same volume, and the relative position of the circulating pump in an area is constant. Therefore, the flow rate of the circulating pump is constant, the pressure fluctuation is small, and the control is simple.

### BRIEF DESCRIPTION OF THE DRAWINGS

FIG. 1 shows a schematic diagram of a simulated moving bed device with a multi-channel rotary valve in the related art.
FIG. 2 shows a schematic diagram of an efficient simulated moving bed device of the present disclosure.

### DETAILED DESCRIPTION OF EMBODIMENTS

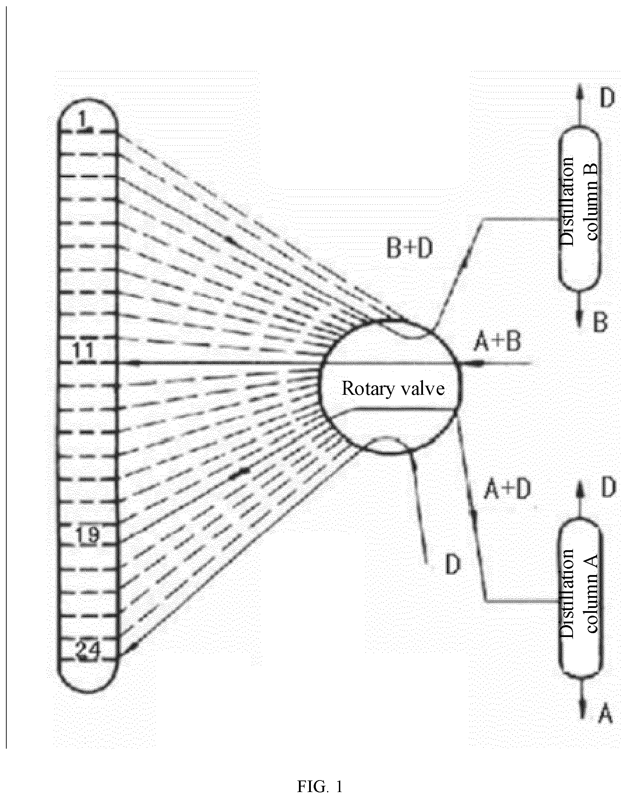

FIG. 1 shows a schematic diagram of a simulated moving bed device with a multi-channel rotary valve in the related art. In the simulated moving bed, a fixed adsorption bed is divided into a plurality of sections filled with adsorbents. With a rotation of the multi-channel rotary valve, a periodic switching of a process is realized. Positions of material inlets and outlets at a certain moment divide the entire adsorption bed into four zones. By using the multi-channel rotary valve, the simulated moving bed enables the four material inlets and outlets to move upward at a speed synchronized with a change of a solid phase concentration. In this way, a closed loop is formed. An overall result of the closed loop is substantially the same as an effect produced by keeping the positions of the inlets and outlets in place while moving the solid adsorbent from top to bottom in an adsorber, so as to achieve the separation of component A and component B. A core device of this process is the multi-channel rotary valve, so as to achieve the purpose of separating products. The simulated moving bed with the multi-channel rotary valve in the related art has technical problems such as high cost, difficult maintenance, poor long-term operation capability and difficult control, which affect the separation effect of the simulated moving bed.

In order to solve the above technical problems, the present disclosure provides a new efficient simulated moving bed device. The technical solution of the present disclosure will be described in detail below in conjunction with specific embodiments and drawings.

### Embodiment 1

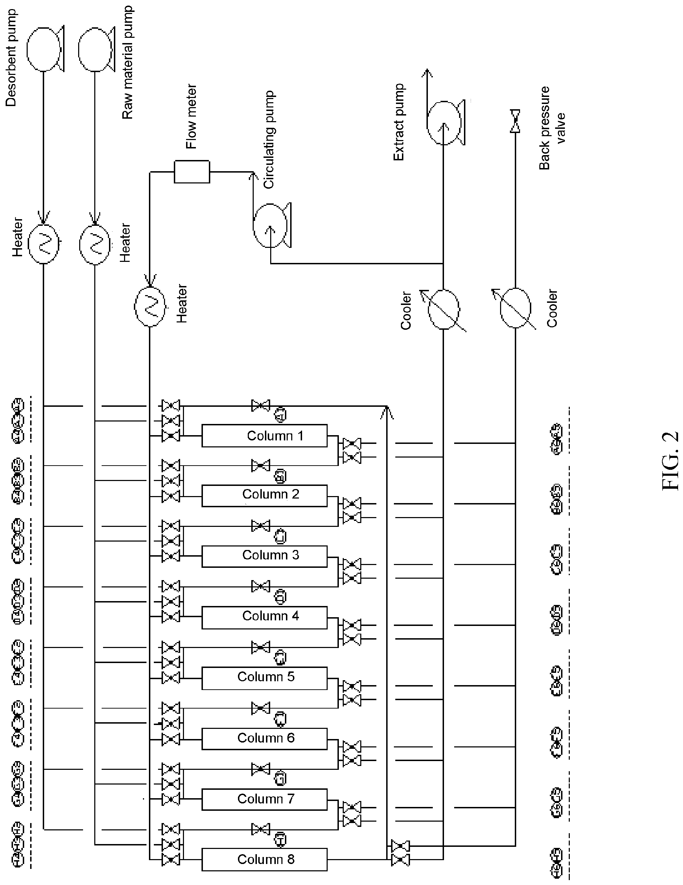

Referring to FIG. 2, an adsorption bed including 8 adsorption columns is illustrated by way of example.

The efficient simulated moving bed device includes an adsorption bed, a raw material feeding system, a desorbent feeding system, a circulating system, an extract system, a raffinate system, a program-controlled valve group, and an automatic control system. Adsorption columns of the adsorption bed are divided into an adsorption zone, a purification zone, a desorption zone and a buffer zone (it should be noted that the adsorption bed including the adsorption zone, the purification zone, the desorption zone and the buffer zone is used in this embodiment, but the buffer zone is not necessary for the present disclosure and is optional).

Upper ends of the adsorption columns 1 to 8 are respectively provided with raw material feeding valves A3, B3, C3, D3, E3, F3, G3, H3, desorbent feeding valves A2, B2, C2, D2, E2, F2, G2, H2, and circulation fluid feeding valves A4, B4, C4, D4, E4, F4, G4, H4. Lower ends of the adsorption columns 1 to 8 are respectively provided with raffinate discharge valves A5, B5, C5, D5, E5, F5, G5, H5, and extract discharge valves A6, B6, C6, D6, E6, F6, G6, H6. Check valves A1, B1, C1, D1, E1, F1, G1, H1 are provided between two adjacent adsorption columns. The raw material feeding system is connected to the raw material feeding valves A3, B3, C3, D3, E3, F3, G3, H3 of the adsorption columns. The desorbent feeding system is connected to the desorbent feeding valves A2, B2, C2, D2, E2, F2, G2, H2 of the adsorption columns. The circulating system includes a circulating pump, and the circulating liquid feeding system is connected to the circulation liquid feeding valves A4, B4, C4, D4, E4, F4, G4, H4 of the adsorption columns through the circulating pump. The extract system is connected to the extract discharge valves A6, B6, C6, D6, E6, F6, G6, H6 of the adsorption columns. The raffinate system is connected to the raffinate discharge valves A5, B5, C5, D5, E5, F5, G5, H5 of the adsorption columns.

In this embodiment, a relative position of the circulating pump in an area remains unchanged, and thus a flow rate of the circulating pump remains unchanged. Each of the connecting pipelines between the adsorption columns has a same volume, and each of the pipelines of the adsorption columns connected to the circulating pump has a same volume. Therefore, the flow rate of the circulating pump of this embodiment is unchanged, the pressure fluctuation is small, and the control is simple.

In this embodiment, all the valves form the program-controlled valve group, the program-controlled valve group is connected to the automatic control system, and the automatic control system may control an opening and closing states of each valve in the program-controlled valve group.

As an improvement of this embodiment, optionally, the raw material feeding system includes a raw material pump and a raw material heater located downstream of the raw material pump, and the raw material heater includes an outlet pipeline connected to the adsorption column. The raw material pump may provide a feed power to feed the raw material, and the raw material heater may heat the raw material to an appropriate temperature, so as to improve the adsorption activity. Specific pumping pressure and heating temperature are determined according to characteristics of a material separation system.

As an improvement of this embodiment, optionally, the desorbent feeding system includes a desorbent pump and a desorbent heater located downstream of the desorbent pump, and the desorbent heater includes an outlet pipeline connected to the adsorption column. The desorbent pump may provide a feed power to feed the desorbent, and the desorbent heater may heat the desorbent to an appropriate temperature, so as to improve the desorbent activity. Specific pumping pressure and heating temperature are determined according to characteristics of a material separation system.

As an improvement of this embodiment, optionally, the extract system includes an extract pump connected to an extract pipeline of the adsorption bed. The extract pump may provide an extraction power for the extract.

As an improvement of this embodiment, optionally, the raffinate system includes a raffinate pump or a back pressure valve connected to a raffinate pipeline of the adsorption bed. The raffinate pump may provide an extraction power for the raffinate.

As an improvement of this embodiment, the circulating pump of the circulating system includes a feed port connected to the extract pipeline of the adsorption bed, so as to circulate the extract.

As an improvement of this embodiment, optionally, each of the valves in the program-controlled valve group is independently selected as one of a ball valve, a needle valve, a stop valve, and a butterfly valve. That is, the 56 valves in this embodiment are independently one of a ball valve, a needle valve, a stop valve, and a butterfly valve, without interfering each other. The valve includes a pneumatic actuator or an electric actuator.

As an improvement of this embodiment, optionally, a relative position of the circulating pump in an area remains unchanged, and therefore a flow rate of the circulating pump remains unchanged. Each of the connecting pipelines between the adsorption columns has a same volume, and each of the pipelines of the adsorption columns connected to the circulating pump has a same volume. Therefore, a flow rate of the circulating pump of this embodiment is unchanged, the pressure fluctuation is small, and the control is simple.

### Embodiment 2

There is provided an efficient simulated moving bed process using the efficient simulated moving bed device with 8 adsorption columns described in Embodiment 1, in which valves are controlled to switch, so as to change each feeding position and each discharging position, so that a simulated movement of an adsorption zone, a purification zone, a desorption zone, and buffer zone is realized. The efficient simulated moving bed process includes following steps.

In 0-t stage, the check valve A1 and the desorbent feeding valve A2 of the adsorption column 1, the desorbent feeding valve B2 and the extract discharge valve B6 of the adsorption column 2, the circulation fluid feeding valve C4 of the adsorption column 3, the check valve D1 of the adsorption column 4, the check valve E1 and the raw material feeding valve E3 of the adsorption column 5, the check valve F1 and the raffinate discharge valve F5 of the adsorption column 6, the check valve G1 of the adsorption column 7, and the check valve H1 of the adsorption column 8 are opened, and the other valves are closed.

At this time, the adsorption zone includes the adsorption column 5 and the adsorption column 6, the raw material enters the adsorption column 5 and the adsorption column 6, a target product component is absorbed, and a non-target component flows out from the outlet.

The purification zone includes the adsorption column 3 and the adsorption column 4, and the circulating pump drives a circulation liquid into the adsorption column 3 and the adsorption column 4 to purify the target product component adsorbed in a previous period.

The desorption zone includes the adsorption column 1 and the adsorption column 2, the desorbent pump drives a desorbent and a part of a desorbent from the buffer to enter the adsorption column 1 and the adsorption column 2, and the target product component purified in a previous period is eluted and extracted from the system, thereby achieving the adsorption and separation.

The buffer zone includes the adsorption column 7 and the adsorption column 8, most of the target product component in the raw material is adsorbed in the adsorption zone, and a remaining mixture containing a large amount of non-target component and a small amount of target component enters the buffer zone and waits for a next period.

The valves are controlled to switch to change positions of feeding and discharging materials in t-2t, 2t-3t and 3t-4t stages, thereby realizing the simulated movement of the adsorption zone, the purification zone, the desorption zone and the buffer zone.

Valve controls in 0-1t, t-2t, 2t-3t, 3t-4t stages are shown in Table 1 to Table 4.

**Table 1 Valve control in 0-1t stage**

| 0-t | | | | | | |
|---|---|---|---|---|---|---|
| Column 1 | A1 | A2 | A3 | A4 | A5 | A6 |
| State | √ | √ | × | × | × | × |
| Column 2 | B1 | B2 | B3 | B4 | B5 | B6 |
| State | × | √ | × | × | × | √ |
| Column 3 | C1 | C2 | C3 | C4 | C5 | C6 |
| State | × | × | × | √ | × | × |
| Column 4 | D1 | D2 | D3 | D4 | D5 | D6 |
| State | √ | × | × | × | × | × |
| Column 5 | E1 | E2 | E3 | E4 | E5 | E6 |
| State | √ | × | √ | × | × | × |
| Column 6 | F1 | F2 | F3 | F4 | F5 | F6 |
| State | √ | × | × | × | √ | × |
| Column 7 | G1 | G2 | G3 | G4 | G5 | G6 |
| State | √ | × | × | × | × | × |
| Column 8 | H1 | H2 | H3 | H4 | H5 | H6 |
| State | √ | × | × | × | × | × |
| | valve opened √ | | valve closed× | | | |

**Table 2 Valve control in t-2t stage**

| t-2t | | | | | | |
|---|---|---|---|---|---|---|
| Column 1 | A1 | A2 | A3 | A4 | A5 | A6 |
| State | √ | × | × | × | × | × |
| Column 2 | B1 | B2 | B3 | B4 | B5 | B6 |
| State | √ | √ | × | × | × | × |
| Column 3 | C1 | C2 | C3 | C4 | C5 | C6 |
| State | × | × | × | × | × | √ |
| Column 4 | D1 | D2 | D3 | D4 | D5 | D6 |
| State | × | × | × | √ | × | × |
| Column 5 | E1 | E2 | E3 | E4 | E5 | E6 |
| State | √ | × | × | × | × | × |
| Column 6 | F1 | F2 | F3 | F4 | F5 | F6 |
| State | √ | × | √ | × | × | × |
| Column 7 | G1 | G2 | G3 | G4 | G5 | G6 |
| State | √ | × | × | × | √ | × |
| Column 8 | H1 | H2 | H3 | H4 | H5 | H6 |
| State | √ | × | × | × | × | × |
| | valve opened √ | | valve closed× | | | |

**Table 3 Valve control in 2t-3t stage**

| 2t-3t | | | | | | |
|---|---|---|---|---|---|---|
| Column 1 | A1 | A2 | A3 | A4 | A5 | A6 |
| State | √ | × | × | × | × | × |
| Column 2 | B1 | B2 | B3 | B4 | B5 | B6 |
| State | √ | × | × | × | × | × |
| Column 3 | C1 | C2 | C3 | C4 | C5 | C6 |
| State | √ | √ | × | × | × | × |
| Column 4 | D1 | D2 | D3 | D4 | D5 | D6 |
| State | √ | × | × | × | × | √ |
| Column 5 | E1 | E2 | E3 | E4 | E5 | E6 |
| State | × | × | × | √ | × | × |
| Column 6 | F1 | F2 | F3 | F4 | F5 | F6 |
| State | √ | × | × | × | × | × |
| Column 7 | G1 | G2 | G3 | G4 | G5 | G6 |
| State | √ | × | √ | × | × | × |
| Column 8 | H1 | H2 | H3 | H4 | H5 | H6 |
| State | √ | × | × | × | √ | × |
| | valve opened √ | | valve closed× | | | |

**Table 4 Valve control in 3t-4t stage**

| 3t-4t | | | | | | |
|---|---|---|---|---|---|---|
| Column 1 | A1 | A2 | A3 | A4 | A5 | A6 |
| State | √ | × | × | × | √ | × |
| Column 2 | B1 | B2 | B3 | B4 | B5 | B6 |
| State | √ | × | × | × | × | × |
| Column 3 | C1 | C2 | C3 | C4 | C5 | C6 |
| State | √ | × | × | × | × | × |
| Column 4 | D1 | D2 | D3 | D4 | D5 | D6 |
| State | √ | √ | × | × | × | × |
| Column 5 | E1 | E2 | E3 | E4 | E5 | E6 |
| State | √ | × | × | × | × | √ |
| Column 6 | F1 | F2 | F3 | F4 | F5 | F6 |
| State | × | × | × | √ | × | × |
| Column 7 | G1 | G2 | G3 | G4 | G5 | G6 |
| State | √ | × | × | × | × | × |
| Column 8 | H1 | H2 | H3 | H4 | H5 | H6 |
| State | √ | × | √ | × | × | × |
| | valve opened √ | | valve closed× | | | |

## Claims

1. An efficient simulated moving bed device, comprising an adsorption bed, a raw material feeding system, a desorbent feeding system, a circulating system, an extract system, a raffinate system, a program-controlled valve group, and an automatic control system, wherein the adsorption bed comprises a plurality of adsorption columns divided into an adsorption zone, a purification zone and a desorption zone;
wherein each adsorption column of the plurality of adsorption columns has an upper end provided with a raw material feeding valve, a desorbent feeding valve and a circulation fluid feeding valve, and a lower end provided with a raffinate discharge valve and an extract discharge valve;
wherein a check valve is provided between two adjacent adsorption columns;
wherein the raw material feeding system is connected to the raw material feeding valve of the each adsorption column;
wherein the desorbent feeding system is connected to the desorbent feeding valve of the each adsorption column;
wherein the circulating system comprises a circulating pump connected to the circulation liquid feeding valve of the each adsorption column, a heater and a flow meter;
wherein the extract system is connected to the extract discharge valve of the each adsorption column;
wherein the raffinate system is connected to the raffinate discharge valve of the each adsorption column; and
wherein all the valves form the program-controlled valve group, the program-controlled valve group is connected to the automatic control system, and the automatic control system is configured to control an opening state and a closing state of each valve in the program-controlled valve group;
wherein the circulating pump of the circulating system comprises a feeding port connected to an extract pipeline of the adsorption bed and a discharging port connected to the circulation liquid feeding valve of the each adsorption column;
wherein the heater and the flow meter are provided downstream of the circulating pump of the circulating system;
wherein each pipeline of the each adsorption column connected to the circulating pump has a same volume; and
wherein each connecting pipeline between the adsorption columns has a same volume.

2. The efficient simulated moving bed device of claim 1, wherein the adsorption bed comprises 3 to 100 adsorption columns.

3. The efficient simulated moving bed device of claim 1 or 2, wherein the adsorption bed comprises 8*N adsorption columns, and wherein N is an integer greater than or equal to 1.

4. The efficient simulated moving bed device of any one of claims 1 to 3, wherein the raw material feeding system comprises a raw material pump and a raw material heater located downstream of the raw material pump, and the raw material heater comprises an outlet pipeline connected to the adsorption column.

5. The efficient simulated moving bed device of any one of claims 1 to 4, wherein the desorbent feeding system comprises a desorbent pump and a desorbent heater located downstream of the desorbent pump, and the desorbent heater comprises an outlet pipeline connected to the adsorption column.

6. The efficient simulated moving bed device of any one of claims 1 to 5, wherein the extract system comprises an extract pump connected to the extract pipeline of the adsorption bed; and wherein a cooler is provided on the extract pipeline.

7. The efficient simulated moving bed device of any one of claims 1 to 6, wherein the raffinate system comprises a raffinate pump or a back pressure valve, and the raffinate pump or the back pressure valve is connected to a raffinate pipeline of the adsorption bed; and wherein a cooler is provided on the raffinate pipeline.

8. The efficient simulated moving bed device of any one of claims 1 to 7, wherein each of the valves in the program-controlled valve group is independently selected as one of a ball valve, a needle valve, a stop valve and a butterfly valve; and wherein each of the valves comprises a pneumatic actuator or an electric actuator.

9. The efficient simulated moving bed device of any one of claims 1 to 8, wherein a relative position of the circulating pump in an area is constant.

10. The efficient simulated moving bed device of any one of claims 1 to 9, wherein the adsorption bed further comprises a buffer zone.

11. An efficient simulated moving bed process implemented by the efficient simulated moving bed device of any one of claims 1 to 9, comprising:
controlling valves to switch to change each feeding position and each discharging position, so as to perform a simulated movement of an adsorption zone, a purification zone and a desorption zone.

12. An efficient simulated moving bed process implemented by the efficient simulated moving bed device of claim 10, comprising:
controlling valves to switch to change each feeding position and each discharging position, so as to perform a simulated movement of an adsorption zone, a purification zone, a desorption zone and a buffer zone.

## Patentansprüche

1. Effiziente Simuliertes-Wanderbett-Vorrichtung umfassend ein Adsorptionsbett, ein Rohmaterialzufuhrsystem, ein Desorptionsmittelzufuhrsystem, ein Zirkulationssystem, ein Extraktsystem, ein Raffinatsystem, eine programmgesteuerte Ventilgruppe und ein automatisches Steuersystem, wobei das Adsorptionsbett eine Mehrzahl von Adsorptionskolonnen umfasst, die in eine Adsorptionszone, eine Reinigungszone und eine Desorptionszone unterteilt sind; wobei jede Adsorptionskolonne der Mehrzahl von Adsorptionskolonnen ein oberes Ende, das mit einem Rohmaterialzufuhrventil, einem Desorptionsmittelzufuhrventil und einem Zirkulationsfluidzufuhrventil versehen ist, und ein unteres Ende, das mit einem Raffinatauslassventil und einem Extraktauslassventil versehen ist, aufweist; wobei ein Rückschlagventil zwischen zwei benachbarten Adsorptionskolonnen bereitgestellt ist;
wobei das Rohmaterialzufuhrsystem mit dem Rohmaterialzufuhrventil jeder Adsorptionskolonne verbunden ist;
wobei das Desorptionsmittelzufuhrsystem mit dem Desorptionsmittelzufuhrventil jeder Adsorptionskolonne verbunden ist;
wobei das Zirkulationssystem eine Zirkulationspumpe, die mit dem Zirkulationsflüssigkeitszufuhrventil jeder Adsorptionskolonne verbunden ist, eine Heizung und einen Durchflussmesser umfasst;
wobei das Extraktsystem mit dem Extraktauslassventil jeder Adsorptionskolonne verbunden ist;
wobei das Raffinatsystem mit dem Raffinatauslassventil jeder Adsorptionskolonne verbunden ist; und
wobei alle Ventile die programmgesteuerte Ventilgruppe bilden, die programmgesteuerte Ventilgruppe mit dem automatischen Steuersystem verbunden ist und das automatische Steuersystem dazu ausgelegt ist, einen Öffnungszustand und einen Schließzustand jedes Ventils in der programmgesteuerten Ventilgruppe zu steuern;
wobei die Zirkultationpumpe des Zirkulationssystem einen Zufuhranschluss, der mit einer Extraktleitung des Adsorptionsbetts verbunden ist, und einen Auslassanschluss, der mit dem Umwälzflüssigkeitszufuhrventil jeder Adsorptionskolonne verbunden ist, umfasst;
wobei die Heizung und der Durchflussmesser stromabwärts der Zirkultationpumpe des Zirkulationssystem bereitgestellt sind;
wobei jede Rohrleitung jeder Adsorptionskolonne, die mit der Zirkultationpumpe verbunden ist, ein gleiches Volumen aufweist; und
wobei jede Verbindungsleitung zwischen den Adsorptionskolonnen ein gleiches Volumen aufweist.

2. Effiziente Simuliertes-Wanderbett-Vorrichtung nach Anspruch 1, wobei das Adsorptionsbett 3 bis 100 Adsorptionskolonnen umfasst.

3. Effiziente Simuliertes-Wanderbett-Vorrichtung nach Anspruch 1 oder 2, wobei das Adsorptionsbett 8*N Adsorptionskolonnen umfasst und wobei N eine ganze Zahl größer als oder gleich 1 ist.

4. Effiziente Simuliertes-Wanderbett-Vorrichtung nach einem der Ansprüche 1 bis 3, wobei das Rohmaterialzufuhrsystem eine Rohmaterialpumpe und eine Rohmaterialheizung umfasst, die stromabwärts der Rohmaterialpumpe angeordnet ist, und die Rohmaterialheizung eine Auslassleitung umfasst, die mit der Adsorptionskolonne verbunden ist.

5. Effiziente Simuliertes-Wanderbett-Vorrichtung nach einem der Ansprüche 1 bis 4, wobei das Desorptionsmittelzufuhrsystem eine Desorptionsmittelpumpe und eine Desorptionsmittelheizung umfasst, die stromabwärts der Desorptionsmittelpumpe angeordnet ist, und die Desorptionsmittelheizung eine Auslassleitung umfasst, die mit der Adsorptionskolonne verbunden ist.

6. Effiziente Simuliertes-Wanderbett-Vorrichtung nach einem der Ansprüche 1 bis 5, wobei das Extraktsystem eine Extraktpumpe umfasst, die mit der Extraktleitung des Adsorptionsbetts verbunden ist; und wobei ein Kühler an der Extraktleitung bereitgestellt ist.

7. Effiziente Simuliertes-Wanderbett-Vorrichtung nach einem der Ansprüche 1 bis 6, wobei das Raffinatsystem eine Raffinatpumpe oder ein Gegendruckventil umfasst und die Raffinatpumpe oder das Gegendruckventil mit einer Raffinatleitung des Adsorptionsbetts verbunden ist; und wobei ein Kühler an der Raffinatleitung bereitgestellt ist.

8. Effiziente Simuliertes-Wanderbett-Vorrichtung nach einem der Ansprüche 1 bis 7, wobei jedes der Ventile in der programmgesteuerten Ventilgruppe unabhängig ausgewählt ist als eines von einem Kugelventil, einem Nadelventil, einem Absperrventil und einem Drosselventil; und wobei jedes der Ventile einen pneumatischen Aktuator oder einen elektrischen Aktuator umfasst.

9. Effiziente Simuliertes-Wanderbett-Vorrichtung nach einem der Ansprüche 1 bis 8, wobei eine relative Position der Zirkultationpumpe in einem Bereich konstant ist.

10. Effiziente Simuliertes-Wanderbett-Vorrichtung nach einem der Ansprüche 1 bis 9, wobei das Adsorptionsbett ferner eine Pufferzone umfasst.

11. Effizientes Simuliertes-Wanderbett-Verfahren, implementiert durch die effiziente Simuliertes-Wanderbett-Vorrichtung nach einem der Ansprüche 1 bis 9, umfassend:
Steuern van Ventilen zum Umschalten, um jede Zuführposition und jede Ausgabeposition zu ändern, um eine simulierte Bewegung einer Adsorptionszone, einer Reinigungszone und einer Desorptionszone durchzuführen.

12. Effizientes Simuliertes-Wanderbett-Verfahren, implementiert durch die effiziente Simuliertes-Wanderbett-Vorrichtung nach Anspruch 10, umfassend:
Steuern van Ventilen zum Umschalten, um jede Zuführposition und jede Ausgabeposition zu ändern, um eine simulierte Bewegung einer Adsorptionszone, einer Reinigungszone, einer Desorptionszone und einer Pufferzone durchzuführen.

## Revendications

1. Dispositif à lit mobile simulé efficace, comprenant un lit d'adsorption, un système d'alimentation en matière première, un système d'alimentation en désorbant, un système de circulation, un système d'extraction, un système de raffinat, un groupe de soupapes à commande programmée et un système de commande automatique, dans lequel le lit d'adsorption comprend une pluralité de colonnes d'adsorption réparties entre une zone d'adsorption, une zone de purification et une zone de désorption ;
dans lequel chaque colonne d'adsorption de la pluralité de colonnes d'adsorption présente, à son extrémité supérieure, une soupape d'alimentation en matière première, une soupape d'alimentation en désorbant et une soupape d'alimentation en fluide de circulation et, à son extrémité inférieure, une soupape d'évacuation du raffinat et une soupape d'évacuation de l'extrait ;
dans lequel une soupape antiretour est disposée entre deux colonnes d'adsorption adjacentes ;
dans lequel le système d'alimentation en matière première est raccordé à la soupape d'alimentation en matière première de chaque colonne d'adsorption ;
dans lequel le système d'alimentation en désorbant est raccordé à la soupape d'alimentation en désorbant de chaque colonne d'adsorption ;
dans lequel le système de circulation comprend une pompe de circulation raccordée à la soupape d'alimentation en liquide de circulation de chaque colonne d'adsorption, un dispositif de chauffage et un débitmètre ;
dans lequel le système d'extraction est raccordé à la soupape d'évacuation de l'extrait de chaque colonne d'adsorption ;
dans lequel le système de raffinat est raccordé à la soupape d'évacuation du raffinat de chaque colonne d'adsorption ; et
dans lequel toutes les soupapes forment le groupe de soupapes à commande programmée, le groupe de soupapes à commande programmée est relié au système de commande automatique, et le système de commande automatique est configuré pour commander l'ouverture et la fermeture de chaque soupape du groupe de soupapes à commande programmée ;
dans lequel la pompe de circulation du système de circulation comprend un orifice d'entrée raccordé à une conduite d'extrait du lit d'adsorption et un orifice de sortie raccordé à la soupape d'alimentation en liquide de circulation de chaque colonne d'adsorption ;
dans lequel le dispositif de chauffage et le débitmètre sont disposés en aval de la pompe de circulation du système de circulation ;
dans lequel chaque conduite reliant une colonne d'adsorption à la pompe de circulation présente le même volume ; et
dans lequel chaque conduite de raccordement entre les colonnes d'adsorption présente le même volume.

2. Dispositif à lit mobile simulé efficace selon la revendication 1, dans lequel le lit d'adsorption comprend 3 à 100 colonnes d'adsorption.

3. Dispositif à lit mobile simulé efficace selon la revendication 1 ou 2, dans lequel le lit d'adsorption comprend 8*N colonnes d'adsorption, N étant un entier supérieur ou égal à 1.

4. Dispositif à lit mobile simulé efficace selon l'une quelconque des revendications 1 à 3, dans lequel le système d'alimentation en matière première comprend une pompe d'alimentation en matière première et un dispositif de chauffage de la matière première situé en aval de cette pompe, le dispositif de chauffage de la matière première comprenant une conduite de sortie raccordée à la colonne d'adsorption.

5. Dispositif à lit mobile simulé efficace selon l'une quelconque des revendications 1 à 4, dans lequel le système d'alimentation en désorbant comprend une pompe d'alimentation en désorbant et un dispositif de chauffage du désorbant situé en aval de cette pompe, le dispositif de chauffage du désorbant comprenant une conduite de sortie raccordée à la colonne d'adsorption.

6. Dispositif à lit mobile simulé efficace selon l'une quelconque des revendications 1 à 5, dans lequel le système d'extraction comprend une pompe d'extraction raccordée à la conduite d'extrait du lit d'adsorption ; et dans lequel un dispositif de refroidissement est disposé sur la conduite d'extrait.

7. Dispositif à lit mobile simulé efficace selon l'une quelconque des revendications 1 à 6, dans lequel le système de raffinat comprend une pompe de raffinat ou une soupape de contre-pression, la pompe de raffinat ou la soupape de contre-pression étant raccordée à une conduite de raffinat du lit d'adsorption ; et dans lequel un dispositif de refroidissement est disposé sur la conduite de raffinat.

8. Dispositif à lit mobile simulé efficace selon l'une quelconque des revendications 1 à 7, dans lequel chacune des soupapes du groupe de soupapes à commande programmée est choisie indépendamment parmi une soupape sphérique, une soupape à pointeau, une soupape d'arrêt et une soupape papillon ; et dans lequel chacune des soupapes comprend un actionneur pneumatique ou un actionneur électrique.

9. Dispositif à lit mobile simulé efficace selon l'une quelconque des revendications 1 à 8, dans lequel la position relative de la pompe de circulation dans une zone est constante.

10. Dispositif à lit mobile simulé efficace selon l'une quelconque des revendications 1 à 9, dans lequel le lit d'adsorption comprend en outre une zone tampon.

11. Procédé à lit mobile simulé efficace mis en œuvre au moyen du dispositif à lit mobile simulé efficace selon l'une quelconque des revendications 1 à 9, comprenant :
la commande de la commutation des soupapes afin de modifier chaque position d'alimentation et chaque position d'évacuation, de manière à simuler le déplacement d'une zone d'adsorption, d'une zone de purification et d'une zone de désorption.

12. Procédé à lit mobile simulé efficace mis en œuvre au moyen du dispositif à lit mobile simulé efficace selon la revendication 10, comprenant :
la commande de la commutation des soupapes afin de modifier chaque position d'alimentation et chaque position d'évacuation, de manière à simuler le déplacement d'une zone d'adsorption, d'une zone de purification, d'une zone de désorption et d'une zone tampon.
